# EUROPEAN PATENT APPLICATION

(11) **EP 0 962 802 A2**
(43) Date of publication of application: **08.12.1999**
(21) Application number: 99304234.0
(22) Date of filing: 01.06.1999
(51) Int. Cl.: G02F 1/01, H01S 3/00

(54) **A solid state laser apparatus**

(30) Priority: 03.06.1998 JP 15408798
(71) Applicant: HITACHI, LTD., Chiyoda-ku, Tokyo (JP); HITACHI METALS, LTD., Chiyoda-ku, Tokyo 100-0005 (JP)
(72) Inventor: Ino, Tadao, Hino-shi, Tokyo 191-0016 (JP); Miyai, Tsuyoshi, Fukaya-shi, Saitama-ken 366-0051 (JP); Sukeda, Hirofumi, Tokorozawa-shi, Saitama-ken 359-0021 (JP); Saga, Hideki, Kokubunji-shi, Tokyo 185-0013 (JP); Toyama, Hiroshi, Hachioji-shi, Tokyo 192-0373 (JP)
(74) Representative: Calderbank, Thomas Roger

(57) **Abstract**

In order to eliminate noise of a solid state laser apparatus generating blue light wave, the solid state laser apparatus comprises a solid state laser light source, an optical modulator having light modulating function and outputting the modulated light therefrom as desired light output, a photo-detector converting one part of output light from a solid state laser light source to an electrical signal, an electrical circuit detecting noise component from the electrical signal and moving the phase of an electrical signal corresponding to the noise component, and control means for applying the output signal of the electrical circuit to the optical modulator so as to diffract the light of the noise component from said desired light component in different direction.

## Description

This invention relates to a solid state laser apparatus, in more detail, a stabilized light source device stabilizing an intensity of optical beam from a laser light source, in for example, a solid state laser apparatus, such as a solid state blue SHG(Second Harmonic Generation) laser, which is useful for an optical device necessitating low noise at high frequency.

At present, a solid state laser apparatus using a solid state blue SHG (Second Harmonic Generation) laser as a light source, is under developing, which generates a high frequency light having wavelength of about 340nm. Such a solid state laser apparatus generating high frequency light has been lately attracted considerable attention, in the field of high-density recording, in medical use, or in measurement use. However, the solid state laser apparatus has not been used enough for the sake of high frequency noise thereof. Particularly, the solid state blue SHG laser generates noise inevitably.

The cause of the noise has been thought as a mode hopping by the competition between modes. The high frequency noise is the hindrance factor of the further application development in an industrial field.

The first known method for stabilizing a light of blue SHG laser is disclosed in Appl.phys.left, Vol.56, No.23, 4 June 1990" by W.J.Kozlovsky and W.lenth. as "Generation of 41 mW of blue radiation by frequency doubling of a GaAlAs diode laser" In the first known method, one part of the blue SHG laser output light is feed bucked to a driving current of the semiconductor laser. But, the first known stabilizing method has such a drawback that the light of the semiconductor laser is influenced by an external light for the sake of SHG system.

Furthermore, second known stabilizing method for stabilizing a light of blue SHG laser is disclosed in( 17 th Annual Meeting of the laser Society of Japan. Digest of technical Peper "Application of LD pumped Cr:LiSAF laser to blue SHGlaser" by SATOU MASAZUMI,MAKIO SATOSI.ANDOU TETUO,MIYAZAKI TATESI,JAN.23,1997). The second known stabilizing method reduces high frequency noise by inserting an etalon in the laser resonator and by making the oscillation mode to single mode. However the etalon is influenced by the mechanical vibration, and there is an obstruction in commercialization of the stabilizing method.

Furthermore, in order to reduce high frequency noise of the solid state blue SHG laser, third stabilizing method has been experimented by present inventors. The third stabilizing method is a method that one part of blue SHG laser is converted to an electrical signal, and the level or offset of the electrical signal is controlled by use of a divider and is used as driving current for the optical modulator. In the third stabilizing method, the optical modulator does not diffract the high frequency noise component and only desired light beam is diffracted.

Said third stabilizing method is a useful method to eliminate noise component. However, by the experiment, it has been cleared that time delay from one part of light signal is converted to electrical signal till the electrical signal is used for driving the optical modulator, becomes about 200 n sec. In the process which an optical modulator reduces noise part, a delay time of the optical modulator becomes about 200nsec. Consequently, the third stabilizing method cannot eliminate noise perfectly. By experiment, it has become clear that the solid state laser apparatus performed the third stabilizing method has about 12% of laser light noise.

It has been known that laser light noise should be within ±3.5% so that a solid state laser apparatus may be usable effectively as a light source of an optical communication apparatus.

Accordingly, an object of this invention is to improve a solid state laser apparatus depending on the third stabilizing method, and provide a solid state laser apparatus which reduces remaining noise depending on the time delay of an optical modulator.

Other object of this invention is to provides a solid state blue SHG(Second Harmonic Generation) laser in which noise included in the laser light thereof is not influenced by a external light, and is within ±3.5%.

In order to attain the above objects, a solid state laser apparatus according to this invention, comprises;
a solid state laser light source generating light wave;
a optical modulator having function modulating the output light of said solid state laser light source and outputting a light therefrom as a desired light output;
a photo-detector converting one part of output light from said solid state laser light source to an electrical signal;
an electrical circuit detecting an electrical signal corresponding to the noise component ; and
a control means for applying the output signal of the electrical circuit to the optical modulator so as to eliminate the light of the noise component from the light from said solid state laser light source .

A preferable embodiment of the electrical circuit includes
a division circuit dividing predetermined reference voltage by output from said photodetector,
a differential circuit differentiating the electric signal to detect rise up and falling down of the noise component in the electric signal,
a circuit for adding the output of a differentiating circuit with the output of the said a division circuit and for applying the output of adder circuit to the light modulater.

By this invention, since the phase of electrical signal being added to the said optical modulator through the electrical circuit is advanced by the time delay of said optical modulator in comparison with a noise of a output from a solid state laser light source in which a electrical signal is added to the optical modulator directly, the light corresponding to the noise component can be separated and be eliminated from the said desired light output. Therefore, the ratio between noise component and said desired light output is reduced.

### IN THE DRAWINGS:

Fig.1 shows a block diagram of one embodiment of a solid state laser apparatus according to this invention.

Fig.2 shows waveforms of electrical signal for explaining an embodiment of a solid state laser apparatus according to this invention.

Fig.3 shows a block diagram constituting a solid state blue SHG laser 1 in Fig.1.

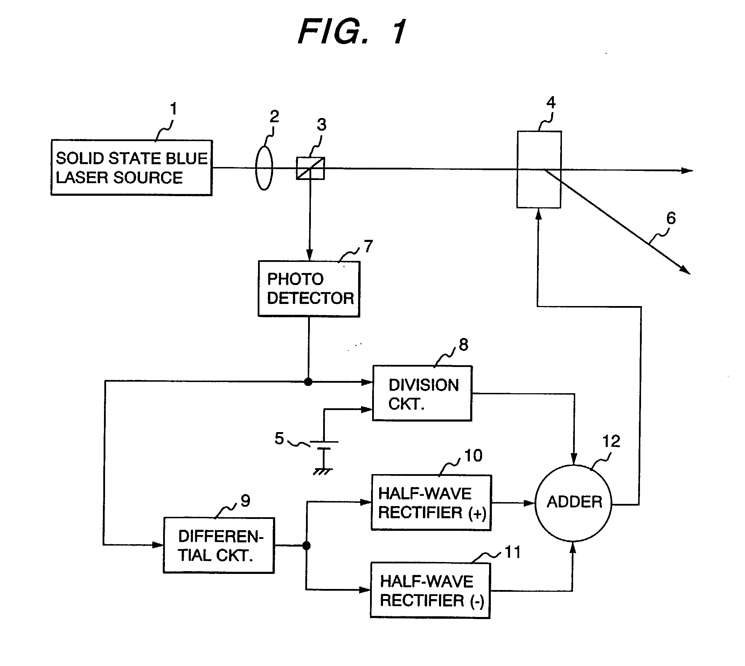

Fig.1 shows a block diagram of one embodiment of a solid state laser apparatus according to this invention.

This embodiment uses a solid state blue SHG laser as a laser 1, and reduces noise component from the output light of the laser 1.

As shown in Fig. 1, this embodiment comprises an optical system and an electrical circuit.

The optical system includes; a solid state blue SHG laser light source 1 being a laser light generating means, condenser lens 2 converging said laser light, beam splitter 3 dividing the said laser light to two parts, and an optical modulator 4 being means for diffracting said laser light.

The electrical circuit includes a light detecting circuit or photo-detector 7 for converting said laser light to an electrical signal, division circuit 8 for dividing reference voltage 5by said electrical signal, a differential circuit 9 for differentiating the output signal from said light detecting circuit 7, a half-wave rectifier (+)10 and a half-wave rectifier (-)11 for rectificating output electrical signal of differential circuit9, an adder circuit 12 for adding the half-wave rectificated electrical signal with said divided electrical signal; and an electrical circuit controlling said optical modulator 4 by the output of adder circuit 12.

A laser light generated from the solid state blue laser source 1 is divided by beam splitter 3. One part of output from beam splitter 3 is bent by 90 degree and is added to light detecting circuit 7. On the other hand , other part of output from beam splitter 3 is condensed on optical modulator 4 through condenser lens 2.

Optical modulator 4 can obtain a diffraction light 6 of which high frequency noise component is reduced, by use of signal from said electrical circuit, so that the laser light may be diffracted and high frequency noise component may not be diffracted.

The operation of the electrical circuit will be explained hereinafter. In light detection circuit7, a laser light is converted into an electrical signal, and is sent to both dividing circuit 8 and differential circuit 9. In dividing circuit 8, voltage of reference voltage souse 5 setting target value is a dividend, electrical signal converted from the laser light is a divisor.

On the other hand, in differential circuit 9, differential wave pattern is made so as to detecting rising up and falling edge of a noise signal. This differential wave pattern is separated to rising up and falling edge by use of half-wave rectifier (+)10 and half-wave rectifier (-)11 respectively. The level of differential wave pattern is changeable. Further, in adder circuit 12, quotient of said division circuit 8 is added with the detecting rising up and falling edge waves. The sum of adder circuit 12 is used as a driving signal of optical modulator4.

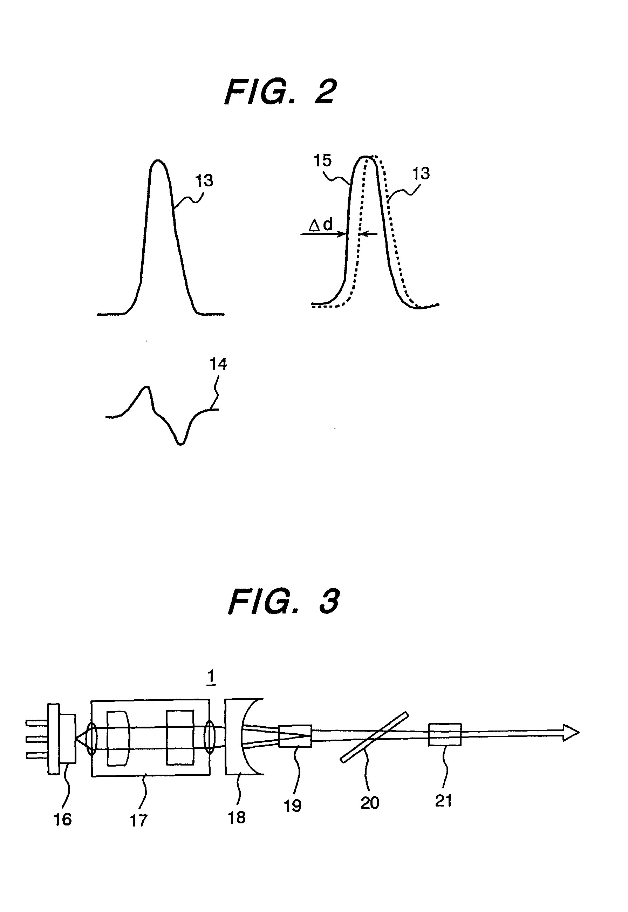

Fig.2 shows signal waveforms in principal parts of said embodiment. Reason that phase of electrical signal is advanced substantially, will be explained in connection with Fig.2.

Differentiated wave form 14 of differential circuit9 are rectified in half-wave rectifiers 10 and 11. Output of division circuit8 and outputs of rectifiers 10 and 11 are added in adder circuit 12. Output signal of adder circuit 12 has a wave form 15 as shown Fig.2 which is composite waves of noise signal wave form after the division and noise signal wave form after the difference. The wave form 15 is approximate to a wave which is moved the phase of a wave 13 of noise component forward by time Δ d. The time Δ d may be changed by a time constant of differential circuit 9, so that The time Δ d may be equal to the time delay of optical modulator 4 (for example 200nsec).

Fig.3 shows a block diagram constituting a solid state blue SHG laser 1 in Fig.1.

Solid state blue SHG laser 1 is composed by semiconductor laser 16 generating laser beam having wavelength of 680 nm, beam compensation lens 17 which lead the laser beam from semiconductor laser 16 to Cr:LiAl crystal 19, laser mirror 18, wavelengh control element 20, and SGH crystal 21 being LiB₃O crystal. Cr:LiAl crystal 19 is excited by the laser beam having wavelength of 680 nm, and generates wide band laser light having peak at about 860 nm. By using wavelength control element 20, a fundamental or dominant wave which may be phase matched with SGH crystal 21 is selected. The intensity of the dominant wave is strengthen by inner resonance between laser mirror 18 and output side surface of SGH crystal 21. And by SGH crystal 21, the dominant wave is converted to a second harmonic wave ,that is, frequency doubled wave having wavelength of about 430 nm.

As described above, in the embodiment, noise component of optical beam is separated from a desired light beam timely, because a phase of a signal driving the optical modulator is advanced approximately to the time delay of the optical modulator. Accordingly, delay of optical modulator is compensated and voltage is added to the modulator. Accordingly, delay of optical modulator is compensated.

Although one embodiment according to this invention is explained above, this invention is not limited to the embodiment. This invention is useful for a solid state blue SHG laser particularly, but, generally, this invention is applicable for a solid state laser apparatus having noise problem depending to time delay of optical modulator. And means for moving electrical signal corresponding to high frequency noise forward may be replaced by an other means.

This invention can compensate the time delay of an optical modulator by an electrical circuit composed by preparation of a differential circuit, rectifying circuits, adder circuts.

By experiment, the noise ratio depending on high frequency noise of this invention has been reduced to a level of 3.5%,on the other hand the noise ratio of conventional apparatus using the same a solid state SHG laser as a solid state SHG laser used in this invention, is 12 %. By this invention, a solid state blue laser may be applicable for measurement devices, an optical recording devices, a Disk mastering device, a particle counter, a high speed laser beam printer, a medical and biography device, a holography, so on.

## Claims

1. A solid state laser apparatus comprises:
a solid state laser light source generating blue light wave;
a optical modulator having function modulating the output light of said solid state laser light source and outputting a light therefrom as desired light output;
a photo-detector converting one part of output light from said solid state laser light source to an electrical signal;
an electrical circuit detecting noise component from said electrical signal; and
a control means for applying the output signal of the electrical circuit to the optical modulator so as to eliminate the light of the noise component from the light from said solid state laser light source.

2. A solid state laser apparatus according to claim 1, wherein said electrical circuit includes circuit means for moving the phase of an electrical signal corresponding to the noise component forward.

3. A solid state laser apparatus according to claim 2, wherein said circuit means includes ;
a division circuit divide predetermined reference voltage by output from said photo-detector;
a differential circuit differentiating the other part of the output of the light detector so as to detect rise up and falling down of the high frequency noise component ,
an adder circuit for adding the output of the division circuit with the output of the said a differential circuit, and for applying the output of adder circuit to the light modulator.

4. A solid state laser apparatus according to claim 2, wherein said solid state laser light source is a solid state blue SHG laser light source.

5. A blue light generating apparatus having a solid state light source generating blue light wave and noise reducing means for reducing noise component included in output of the blue light wave, wherein said high frequency noise reducing means comprises:
a photo detector converting one part of output from said solid state light source to an electric signal,
an electrical circuit for detecting noise component in the electric signal and for moving the phase of the noise component in the electric signal forward, and
an optical modulator to which output of the electrical circuit is applied and which eliminate the light of the wave component from said solid state light source.

6. Blue light generating apparatus according to claim 5, wherein said electrical circuit includes ;
first means for dividing a predetermined reference voltage by said electrical signal,
second means for differentiating said electrical signal,
third means for half-wave rectifying the differentiated signal obtained by second means, and
means for adding the half-wave rectified electrical signal obtained by third means and the divided signal obtained by first means , and for applying the added electrical signal to said optical modulator.

7. A blue light generating apparatus according to claim 1, wherein said solid state laser light source is a solid state blue SHG laser light source.
